# FASCICULE DE BREVET EUROPEEN

(11) **EP 1 674 677 B1**
(45) Date de publication et mention de la délivrance du brevet: **04.08.2010**
(21) Numéro de dépôt: 04447287.6
(22) Date de dépôt: 22.12.2004
(51) Int. Cl.: F01M 11/03, F01M 1/16, B01D 35/027

(54) **Dispositif d'obturation multifonctionnel pour filtre de lubrification**
Multifunktionelle Verschlussvorrichtung für Schmiermittelfilter
Multifunctional closure device for lubrication filter.

(43) Date de publication de la demande: 28.06.2006
(73) Titulaire: Techspace Aero SA, 4042 Milmort (BE)
(72) Inventeur: Pierret, Bernard, 4041 Milmort (BE)
(74) Mandataire: pronovem

(56) Documents cités:
- DE-U1- 20 118 682
- US-A1- 2003 127 384

## Description

### Objet de l'invention

La présente invention se rapporte à un dispositif d'obturation à clapets multifonctionnel pour pompe à huile appartenant au système de lubrification dans un moteur aéronautique.

Le dispositif de l'invention est susceptible d'être utilisé dans tout autre domaine technique où un circuit hydraulique doit être protégé contre au moins deux des trois phénomènes suivants : surpression, colmatage du filtre et vidange du circuit lors de l'entretien.

### Arrière-plan technologique et état de la technique

Il est connu que les moteurs aéronautiques sont lubrifiés par un ensemble de pompes. Une partie de celles-ci, les pompes haute pression, assurent la mise en pression de l'huile prélevée dans le réservoir qui est fournie ensuite aux organes moteurs à lubrifier, par exemple aux enceintes de supports de palier. Une autre partie des pompes, les pompes de récupération, assurent la récupération de l'huile récoltée aux points bas du moteur pour la renvoyer au réservoir, via un circuit amont. Généralement, ces pompes sont soit entraînées par un même arbre en un "groupe de lubrification", soit réparties individuellement dans le moteur. Typiquement, on peut trouver une pompe haute pression (plus d'une dizaine de bars) qui alimente les gicleurs et plusieurs pompes de récupération sur le même arbre, ainsi que par exemple une pompe de récupération additionnelle de l'huile provenant d'un autre équipement.

Après le passage dans les pompes de récupération et le retour au réservoir, l'huile est filtrée par un filtre, situé de préférence vers le bas du carter du groupe de lubrification, de manière à éviter au maximum l'effet néfaste au niveau de ses attaches, qui serait dû aux efforts de cisaillement induits par les vibrations du moteur.

Le groupe de lubrification est généralement muni d'un certain nombre de sécurités sous forme de clapets présentant une obturation ou une ouverture adéquate. Ceux-ci peuvent être de trois types :
- un clapet s'ouvrant en cas de surpression dans le circuit d'huile ;
- un clapet de dérivation (*by-pass*) s'ouvrant lorsque le filtre est colmaté ;
- un clapet fermant l'arrivée d'huile dans le filtre en vue du démontage de celui-ci, sans vidanger complètement le circuit de lubrification.

Selon l'état de la technique, chaque logement de clapet séparé demande un usinage particulier dans le carter du groupe de lubrification, ce qui rend le dispositif d'obturation et filtrage volumineux, compliqué et coûteux à la réalisation.

Le document US 2003/0127384 A1 décrit un module-filtre pour système de lubrification dans un avion, une vanne de dérivation intégrée, actionnable par pression différentielle en cas de colmatage du filtre et une vanne de coupure pour la maintenance, dans une unité remplaçable à ligne unique. Un tel module-filtre peut également être incorporé dans une installation de pompe de lubrification ou de récupération dans un avion.

### Buts de l'invention

La présente invention vise à fournir une solution qui permette de s'affranchir des inconvénients de l'état de la technique.

En particulier, l'invention a pour but de fournir un dispositif d'obturation à clapets multifonctionnel, éventuellement moins encombrant, mais surtout plus léger et moins coûteux à la réalisation.

L'invention a également pour but de fournir un dispositif d'obturation qui soit d'assemblage aisé.

### Principaux éléments caractéristiques de l'invention

L'objet de la présente invention se rapporte à un dispositif de sécurité par obturation triple à clapets, appelé ci-après dispositif multi-clapets, utilisé dans un circuit hydraulique et de préférence associé à un pot-filtre amovible pour groupe de lubrification dans un moteur aéronautique.

Le dispositif multi-clapets de l'invention comprend :
- un premier clapet pour la fermeture de la sortie d'huile dans le filtre en vue du démontage du filtre ;
- un deuxième clapet de dérivation ou *by-pass* s'ouvrant lorsque le filtre est colmaté ;
- un troisième clapet s'ouvrant en cas de surpression dans le groupe de lubrification.

Selon l'état de la technique, chaque clapet a son logement individuel usiné dans un axe arbitraire, qui est également l'axe d'ouverture et de fermeture, en fonction de la place disponible. Selon l'invention, par contre, les clapets sont mobiles selon un seul et même axe d'alignement dans le dispositif multi-clapets. De plus, le dispositif multi-clapets est usiné hors masse dans une pièce intermédiaire, distincte du carter d'huile, ladite pièce distincte venant se placer dans un logement unique usiné dans le carter d'huile concentrique avec un axe de symétrie du pot-filtre, identique à l'axe d'alignement précité.

Des formes d'exécution préférées de l'invention sont décrites dans les revendications 2 à 7.

L'invention se rapporte aussi à un filtre à huile comprenant un pot-filtre et un dispositif multi-clapets comme décrit ci-dessus.

### Brève description des figures

La figure 1 représente schématiquement une vue en coupe du dispositif d'obturation à clapets multifonctionnel selon la présente invention, avec son pot-filtre.

La figure 2 représente schématiquement une vue en perspective du dispositif de la figure 1.

### Description d'une forme d'exécution référée de l'invention

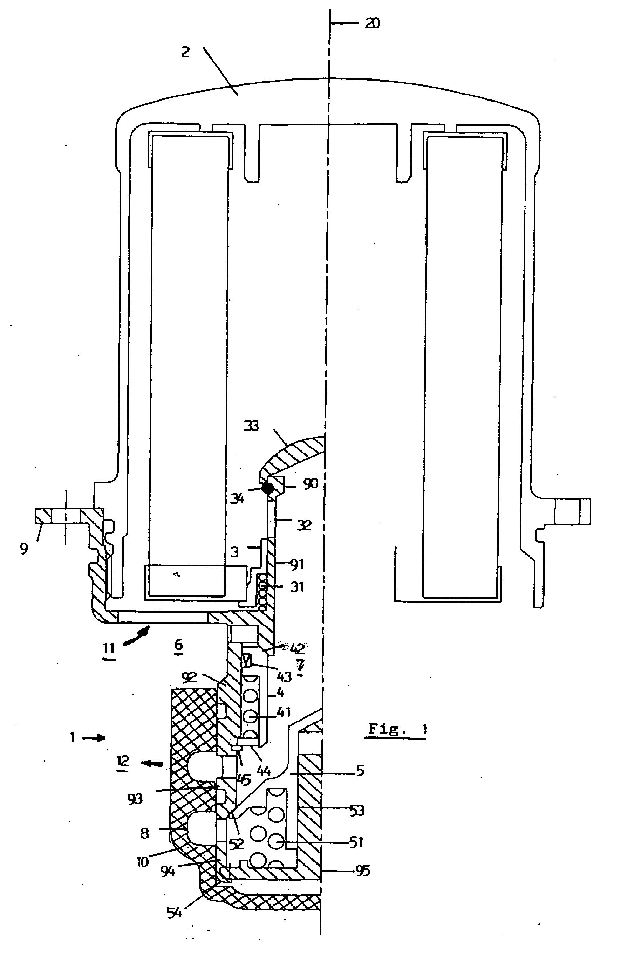

La figure 1 montre le dispositif d'obturation à clapets multifonctionnel 1, en abrégé pièce multi-clapets, selon la présente invention, avec les voies d'arrivée et de sortie d'huile dans le pot-filtre 2, situé entre la pompe d'alimentation et le moteur. Une entrée d'huile 11 est prévue au niveau du filtre et une sortie 12 est prévue au niveau de la pièce multi-clapets 1.

L'aspect innovant de ce dispositif est qu'en termes d'usinage, il comporte une seule zone précise à réaliser au niveau du carter du groupe de lubrification 10, dans laquelle vient se loger la pièce multi-clapets 1.

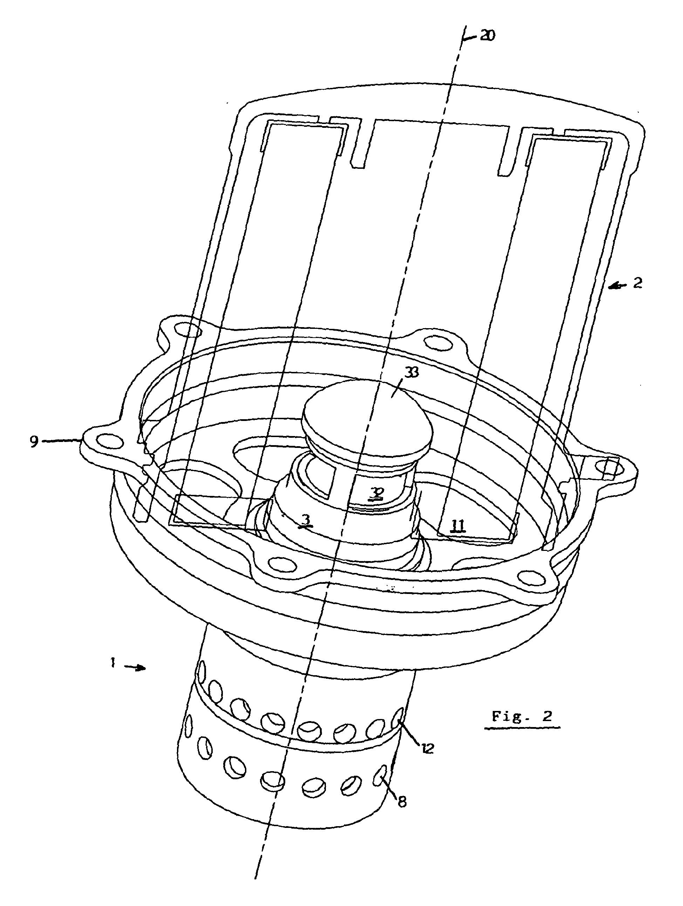

En l'espèce, ce dispositif comprend trois clapets d'obturation :
- un premier clapet 3 de forme cylindrique, solidaire d'un ressort de rappel 31, vient obturer une ou plusieurs lumières 32 usinées dans la surface latérale d'un cylindre concentrique avec le dispositif de filtre (axe 20). La partie fixe 33, comprenant notamment une coupole de préférence frettée sur le corps cylindrique précité, représentée hachurée sur la figure, fait partie du corps monobloc de la pièce multi-clapets. Ce premier clapet 3 a pour fonction d'obturer le passage d'huile du groupe de lubrification vers l'extérieur, lorsque l'on retire le pot-filtre 2, ce qui permet d'éviter la vidange de tout le circuit de lubrification, voir de tout le moteur, au moment où l'on effectue la maintenance du moteur ou si l'on oublie de remonter le filtre après maintenance. Le clapet 3 effectue un mouvement dans l'axe du clapet, c'est-à-dire vers le haut par rapport à la figure 1, et obture donc la lumière 32, sous l'effet du ressort 31, lorsque l'on enlève le pot-filtre 2. L'étanchéité est assurée par un joint de type O-ring 34. Inversement, la mise en place du pot-filtre 2 entraîne le clapet vers le bas (toujours par rapport à la figure 1), tout en dégageant la lumière 32. Une autre vue est montrée à la figure 2 ;
- un deuxième clapet de dérivation (ou *by-pass*). Généralement, la pression dans le pot-filtre 2 est légèrement inférieure à la pression en amont du filtre. Au cas où la perte de charge deviendrait trop importante dans le filtre, par suite par exemple d'un colmatage de celui-ci, on crée un circuit de dérivation d'huile, celle-ci ne passant alors plus dans le filtre. Cette dérivation est nécessaire car il est impératif d'assurer la continuité de la lubrification dans les organes moteurs tels que les roulements de palier. Le deuxième clapet 4 solidaire d'un ressort précontraint 41 assure alors cette fonction. Ce deuxième obturateur à clapet comporte une zone d'étanchéité, la zone de contact 42, qui est le siège du clapet ainsi qu'un joint dynamique 43, qui ne contrecarre pas la fonction du clapet. Le joint dynamique, non indispensable, a une forme en "V". Finalement, le dispositif comporte encore une butée de ressort 44, assemblée à l'aide d'un circlips 45. Le principe de fonctionnement est le suivant : lorsque la pression en amont du filtre 6 devient beaucoup plus grande que la pression en aval du filtre 7, l'effort hydraulique dirigé vers le bas sur le clapet 4 contrecarre l'effort du ressort 41 dirigé vers le haut et le clapet s'ouvre en laissant passer l'huile vers le moteur ;
- enfin, un troisième clapet est actif lors d'une surpression dans l'ensemble du circuit de lubrification. Le clapet 5 solidaire d'un ressort précontraint 51 met en communication la zone de surpression interne 7 avec un drain 8 assurant le retour de l'huile au réservoir via une des pompes de récupération. La zone d'étanchéité est réalisée au niveau du siège 52. Du fait de la surpression du côté aval du filtre notamment, l'effort hydraulique vers le bas est suffisant pour contrecarrer l'effort vers le haut du ressort 51. A nouveau les parties fixes, dont la zone de guidage du clapet 53 sont représentées hachurées. Il est à remarquer que la partie assemblée 54 subit un effort très important et doit être dimensionnée en conséquence.

La pièce multi-clapets 1 comprend en outre une ou plusieurs brides 9 pour sa fixation au carter du groupe de lubrification, dans l'exemple présenté ici. Dans une forme d'exécution alternative, elle peut également être fixée au filtre.

Le dispositif d'obturation à clapets multifonctionnel 1 selon la présente invention est avantageusement réalisé soit sous forme d'une seule pièce fixe usinée, soit sous forme de plusieurs pièces fixes assemblées, après usinage, par soudage, sertissage, etc. Au final, une seule pièce fixe permet d'assurer les trois fonctions d'obturation précitées.

La présente invention comporte un nombre important d'avantages sur l'état de la technique :
- une réduction de masse du fait de l'usinage d'un seul corps ;
- une seule gestion de pièce pour la production et les documents administratifs ;
- un seul assemblage ;
- un seul usinage concentrique dans le carter de lubrification donc l'utilisation d'un seul outil et une plus grande facilité d'accès avec réduction de temps machine et donc de coût de fabrication. A cet égard, le gain le plus important est réalisé au niveau du travail de fonderie. En effet, le fait de réaliser trois logements distincts de clapets comme dans l'état de la technique implique une liaison très complexe et donc très coûteuse de canaux de fonderie (utilisation obligatoire d'une boîte à noyaux et en tout cas plus de noyaux dans le cas de trois clapets, difficultés de démoulage notamment).

## Revendications

1. Dispositif de sécurité par obturation triple à clapets, appelé ci-après dispositif multi-clapets (1), associé à un pot de filtrage ou pot-filtre amovible (2) dans un circuit hydraulique, de préférence un groupe de lubrification, comprenant un carter d'huile (10), lesdits clapets étant :
- un premier clapet (3) pour la fermeture de la sortie d'huile dans le filtre en vue du démontage du filtre ;
- un deuxième clapet de dérivation ou *by-pass* (4) s'ouvrant lorsque le filtre est colmaté ;
- un troisième clapet (5) s'ouvrant en cas de surpression dans le circuit hydraulique;
**caractérisé en ce que** les clapets (3,4,5) sont mobiles selon un seul et même axe d'alignement (20) dans le dispositif multi-clapets (1), ce dernier étant usiné hors masse dans une pièce intermédiaire, distincte du carter d'huile (10), ladite pièce intermédiaire venant se placer dans un logement unique usiné dans le carter d'huile (10) concentrique avec un axe de symétrie (20) du pot-filtre (2), identique à l'axe d'alignement précité.

2. Dispositif multi-clapets (1) selon la revendication 1, **caractérisé en ce que** le premier clapet (3) est de forme cylindrique, solidaire d'un ressort de rappel (31) et configuré pour obturer une ou plusieurs lumières (32) usinées dans la surface latérale d'un cylindre concentrique dudit dispositif (1), définissant une partie fixe (90,91,33) rapportée au clapet (3), ce dernier étant apte à effectuer un mouvement dans l'axe du cylindre, de fermeture, respectivement d'ouverture, pour obturer, respectivement dégager ladite lumière (32), sous l'effet dudit ressort (31), lorsque l'on enlève, respectivement l'on replace le pot-filtre (2).

3. Dispositif multi-clapets (1) selon la revendication 1 ou 2, **caractérisé en ce que** le deuxième clapet de dérivation ou *by-pass* (4), pour créer un circuit de dérivation d'huile et éviter le passage d'huile dans le pot-filtre (2), en cas de colmatage de celui-ci, est solidaire d'un ressort précontraint (41) et définit un obturateur comportant une zone d'étanchéité correspondant à une zone de contact (42), qui est le siège du clapet (4) et un joint dynamique (43) de forme en "V", ainsi qu'une butée de ressort (44), assemblée à l'aide d'un circlips (45), configuré de manière telle que, lorsque la pression en amont du filtre (6) devient beaucoup plus grande que la pression en aval du filtre (7) du circuit hydraulique, l'effort hydraulique sur ledit deuxième clapet (4) contrecarre l'effort dudit ressort associé (41) lui-même dirigé en sens inverse et ledit deuxième clapet (4) s'ouvre en laissant passer l'huile dans un circuit de dérivation.

4. Dispositif multi-clapets (1) selon la revendication 1, 2 ou 3, **caractérisé en ce que** le troisième clapet (5) est solidaire d'un ressort précontraint (51) et configuré pour être actif lors d'une surpression dans l'ensemble du circuit hydraulique, par mise en communication de la zone de surpression interne (7) avec un drain (8) assurant le retour de l'huile vers une autre partie du circuit hydraulique, l'obturateur correspondant audit troisième clapet étant apte à s'ouvrir au niveau d'un siège (52), lorsque l'effort hydraulique sur le clapet (5) est suffisant pour contrecarrer l'effort en sens inverse dudit ressort associé (51).

5. Dispositif multi-clapets (1) selon l'une quelconque des revendications précédentes, **caractérisé en ce que** la partie fixe dudit dispositif multi-clapets (1) destinée à être insérée dans le carter d'huile (10) est réalisée soit sous forme d'une seule pièce fixe directement et complètement usinée, soit sous forme de plusieurs pièces fixes (33; 9,90,91,92,93,94; 95) assemblées après usinage par exemple par soudage, sertissage ou frettage.

6. Dispositif multi-clapets (1) selon l'une quelconque des revendications précédentes, **caractérisé en ce qu'**il comporte une pluralité de brides (9) pour la fixation du pot-filtre (2) à la pièce multi-clapets (1) et/ou pour la fixation de la pièce multi-clapets (1) au carter (10) du circuit hydraulique.

7. Dispositif multi-clapets (1) selon l'une quelconque des revendications précédentes, **caractérisé en ce qu'**il est réalisé en acier inoxydable ou en aluminium.

8. Filtre à huile comprenant un pot-filtre (2) et un dispositif multi-clapets (1) selon l'une quelconque des revendications précédentes, pour groupe de lubrification dans un moteur aéronautique.

## Claims

1. Safety device by triple valve shutting, hereinafter called multi-valve device (1), associated with a filtering pot or removable filter pot (2), in a hydraulic circuit, preferably a lubrication group, comprising an oil chamber (10), said valves being:
- a first valve (3) to close the oil outlet in the filter for dismantling the filter;
- a second by-pass valve (4) that opens when the filter is blocked;
- a third valve (5) that opens in case of excess pressure in the hydraulic circuit;
**characterized in that** the valves (3,4,5) are aligned so they move along a single axis (20) in the multi-valve device (1), the latter part being machined en bloc from an intermediate part that is separate from the oil chamber (10), said intermediate part being fitted into a single housing machined in the oil chamber (10) concentric with a symmetry axis (20) of the filter pot (2), that is identical to the aforementioned alignment axis.

2. Multi-valve device (1) according to Claim 1, **characterized in that** the first valve (3) is cylindrical in shape, integral with a return spring (31) and configured so as to cover one or several apertures (32) machined in the side surface of a concentric cylinder of said device (1), defining a fixed portion (90,91,33) attached to the valve (3), the latter part being able to move in the axis of the closing or opening cylinder, respectively, to cover or uncover, respectively, said aperture (32), under the action of said spring (31), when the filter pot (2) is removed or replaced, respectively.

3. Multi-valve device (1) according to Claim 1 or 2, **characterized in that**, in order to create an oil by-pass circuit and avoid the passage of oil in the filter pot (2), in case of blocking thereof, the second by-pass valve (4) is integral with a prestressed spring (41) and defines a cover comprising a sealing zone corresponding to a contact zone (42), which is the seat of the valve (4) and a V-shaped dynamic seal (43), as well as a spring stop (44), assembled by a circlip (45), configured such that, when the pressure upstream of the filter (6) becomes much greater than the pressure downstream of the filter (7) of the hydraulic circuit, the hydraulic stress on said second valve (4) counters the stress of said associated spring (41), itself steered in the opposite direction, and said second valve (4) opens, allowing the oil to flow in a by-pass circuit.

4. Multi-valve device (1) according to Claim 1, 2 or 3, **characterized in that** the third valve (5) is integral with a prestressed spring (51) and configured to be active during excess pressure in the entire hydraulic circuit, by connecting the internal excess pressure zone (7) with a drain (8) ensuring the return of the oil toward another portion of the hydraulic circuit, the cover corresponding to said third valve being able to open at the level of a seat (52), when the hydraulic stress on the valve (5) is sufficient to counter the stress in the opposite direction of said associated spring (51).

5. Multi-valve device (1) according to any one of the preceding claims, **characterized in that** the fixed portion of said multi-valve device (1) intended to be inserted in the oil chamber (10) is realized either in the form of a single fixed piece that is directly and completely machined, or in the form of several fixed pieces (33; 9,90,91,92,93,94; 95) that are assembled after machining, for example by welding, crimping or bracing.

6. Multi-valve device (1) according to any one of the preceding claims, **characterized in that** it comprises a plurality of flanges (9) for fixing the filter pot (2) to the multi-valve piece (1) and/or for fixing the multi-valve piece (1) to the chamber (10) of the hydraulic circuit.

7. Multi-valve device (1) according to any one of the preceding claims, **characterized in that** it is made of stainless steel or aluminum.

8. oil filter comprising a filter pot (2) and a multi-valve device (1) according to any one of the preceding claims, for a lubrication group in an aeronautic engine.

## Patentansprüche

1. Sicherheitsvorrichtung durch Dreifach-Ventilverschluss, nachfolgend als Mehrfachventilvorrichtung bezeichnet (1), verbunden mit einem Filtertopf oder einem bewegbaren Filtertopf (2) in einem Hydraulikkreis, vorzugsweise einer Schmiergruppe, eine Ölwanne (10) umfassend, wobei die Ventile sind:
- ein erstes Ventil (3) zum Verschließen des Ölaustritts in den Filter im Hinblick auf die Demontage des Filters,
- ein zweites Umleit- oder by-pass-Ventil (4), das sich öffnet, wenn der Filter verstopft ist,
- ein drittes Ventil (5), das sich bei Überdrück im Hydraulikkreis öffnet,
**dadurch gekennzeichnet, dass** die Ventile (3, 4, 5) gemäß einer einzigen und selben Fluchtachse (20) in der Mehrfachventilvorrichtung (1) bewegbar sind, wobei diese außerhalb der Masse in einem Zwischenteil gefertigt wurde, das sich von der Ölwanne (10) unterscheidet, wobei das Zwischenteil in einem einzigen Gehäuse platziert ist, das in die Ölwanne (10) konzentrisch eingearbeitet ist mit einer Symmetrieachse (20) des Filtertops (2), die mit der vorgenannten Fluchtachse identisch ist.

2. Mehrfachventilvorrichtung (1) nach Anspruch 1, **dadurch gekennzeichnet, dass** das erste Ventil (3) eine zylindrische Form hat, mit einer Rückholfeder (31) verbunden ist und konfiguriert wurde, um eine oder mehrere Öffnungen (32) zu verschließen, die in die Seitenfläche eines konzentrischen Zylinders der Vorrichtung (1) eingearbeitet sind, einen starren Abschnitt (90, 91, 33) definierend, der mit dem Ventil (3) in Beziehung steht, wobei Letztgenanntes imstande ist, sich in der Achse des Zylinders schließen beziehungsweise öffnend zu bewegen, um die Öffnung (32) durch Einfluss der Feder (31) zu verschließen beziehungsweise freizugeben, wenn der Filtertop (2) entfernt beziehungsweise wieder eingesetzt wird.

3. Mehrfachventilvarrichtung (1) nach Anspruch 1 oder 2, **dadurch gekennzeichnet, dass** das zweite Umweit- oder by-pass-Ventil 1 (4), um einen Öl-Umleitkreis zu bilden und den Öldurchgang im Filtertopf (2) bei Verstopfung desselben zu vermeiden, mit einer vorgespannten Feder (41) verbunden ist und einen Verschluss definiert, der einen Dichtigkeitsbereich umfasst, der einem Kontaktbereich (42) entspricht, der der Sitz des Ventils (4) ist und eine dynamische Dichtung (43) in V-Form, sowie einen Federanschlag (44), der mit Hilfe einer Ringsicherung montiert ist, wobei die Konfiguration derart ist, dass, wenn der Druck vor dem Filter (6) sehr viel größer wird als der Druck nach dem Filter (7) des Hydraulikkreises, die hydraulische Beanspruchung des zweiten Ventils (4) die Beanspruchung der zugeordneten Feder (41) behindert, die selbst in umgekehrte Richtung gelenkt ist, und sich das zweite Ventil (4) öffnet und das Öl in einen Umleitkreis passieren lässt.

4. Mehrfachventilvorrichtung (1) nach Anspruch 1, 2 oder 3, **dadurch gekennzeichnet, dass** das dritte Ventil (5) mit einer vorgespannten Feder (51) verbunden ist und konfiguriert wurde, um bei einem Überdruck im gesamten Hydraulikkreis aktiv zu sein durch Herstellung einer Verbindung des internen Überdruckbereichs (7) mit einer Leitung (8), die den Rücklauf des Öls in einen anderen Abschnitt des Hydraulikkreises gewährleistet, wobei der dem dritten Ventil entsprechende Verschluss imstande ist, sich auf Ebene eines Sitzes (52) zu öffnen, wenn die hydraulische Beanspruchung des Ventils (5) ausreichend ist, um die Beanspruchung der zugeordneten Feder (41) in umgekehrte Richtung zu behindern.

5. Mehrfachventilvorrichtung (1) nach einem der vorangehenden Ansprüche, **dadurch gekennzeichnet, dass** der starre Abschnitt der Mehrfachventilvorrichtung (1), der dazu bestimmt ist, in die Ölwanne (10) eingesetzt zu werden, entweder in Form eines einzigen starren direkt und vollständig gefertigten Teils hergestellt ist oder in Form mehrerer starrer Teile (33; 9, 90, 91, 92, 93, 94; 95), die nach der Bearbeitung zum Beispiel durch Schweißen, Quetschen oder Frettieren verbunden werden.

6. Mehrfachventilvorrichtung (1) nach einem der vorangehenden Ansprüche, **dadurch gekennzeichnet, dass** sie eine Vielzahl von Flanschen (9) für die Befestigung des Filtertopfes (2) am Mehrfachventilteil (1) umfasst und/oder für die Befestigung des Mehrfachventilteils (1) am Gehäuse (10) des Hydraulikkreises.

7. Mehrfachventilvorrichtung (1) nach einem der vorangehenden Ansprüche, **dadurch gekennzeichnet, dass** sie aus Edelstahl oder Aluminium hergestellt ist.

8. Ölfilter, der als Schmiergruppe in einem Flugzeugmotor einen Filtertopf (2) und eine Mehrfachventilvorrichtung (1) nach irgendeinem der vorangehenden Ansprüche umfasst.
